# FASCICULE DE BREVET EUROPEEN

(11) **EP 3 024 762 B1**
(45) Date de publication et mention de la délivrance du brevet: **22.04.2020**
(21) Numéro de dépôt: 14744492.1
(22) Date de dépôt: 16.07.2014
(51) Int. Cl.: B65G 45/12, B65G 45/16

(54) **DISPOSITIF DE RACLAGE D'UNE BANDE TRANSPORTEUSE**
VORRICHTUNG ZUM ABSCHÄLEN EINES FÖRDERBANDES
DEVICE FOR SCRAPING A CONVEYOR BELT

(30) Priorité: 22.07.2013 BE 201300499
(43) Date de publication de la demande: 01.06.2016
(73) Titulaire: Technic Gum International Polymeres SPRL, 7063 Neufvilles (BE)
(72) Inventeur: WARTELLE, Arnaud, F-59560 Comines (FR)
(74) Mandataire: Pronovem
(86) Numéro de dépôt international: PCT/EP2014/065236
(87) Numéro de publication internationale: WO 2015/010988

(56) Documents cités:
- GB-A- 2 081 662
- JP-U- S4 846 382
- JP-U- S48 106 070
- US-B1- 6 820 734

## Description

### Objet de l'invention

La présente invention se rapporte à un dispositif de raclage de brin de retour d'une bande transporteuse.

### Etat de la technique

Tous les racleurs de bande s'usent principalement dans le milieu qui est la zone la plus sale c'est-à-dire la plus abrasive.

La demande EP0637560 décrit un dispositif de raclage du brin de retour d'une bande transporteuse, comprenant une lame souple contre laquelle prend appui un profilé de support exerçant une pression en direction du brin de retour, la lame souple étant en contact avec le support dans une zone du profilé de support, et, de part et d'autre de cette zone centrale, une zone dans laquelle le bord de la lame s'écarte progressivement du profilé de support précité. Dans le cas de ce racleur, les côtés peuvent descendre à mesure que le centre est de plus en plus usé. Cela permet d'offrir un contact toujours rectiligne avec la bande à nettoyer.

Il a été prévu dans ce document qu'un ou plusieurs ressorts longitudinaux dans la lame en élastomère permettent de lui donner une tenue mécanique adaptée. Sans ces ressorts, la lame s'affaisserait de son propre poids pour devenir convexe et n'aurait qu'un contact au centre.

Ce type de dispositif présente néanmoins un certain nombre d'inconvénients. Lorsque la lame se creuse sous l'effet de l'usure, il faut pousser celle-ci contre la bande suffisamment fort pour fléchir les côtés (fléchir les ressorts internes). Si la flèche d'usure est de 10mm, alors l'ensemble du racleur doit monter de 10mm et les côtés doivent descendre de cette même valeur.

En outre, lorsque les bords de la lame descendent, la pression sur ceux-ci augmente en fonction de la rigidité des ressorts internes de la lame. Cela signifie qu'avec une lame neuve, le centre a une bonne pression de contact mais les côtés sont insuffisamment en contact avec la bande et manquent souvent de pression, donnant un raclage de moins bonne qualité, tandis que, lorsque la lame est usée au centre, la pression au milieu est réduite au détriment de la qualité du raclage au centre ou encore que la pression sur les côtés devient excessive voir néfaste pour les côtés de la bande.

Enfin, la bande peut présenter une forme légèrement concave ou convexe dans la zone de contact avec le racleur, ce qui rend l'adaptation de la forme du racleur plus nécessaire encore.

Si la bande offre une surface concave, la lame peut s'adapter en devenant convexe, mais une partie importante de l'effet de récupération de l'usure est perdue.

Si au contraire, si la bande présente une forme convexe, le racleur de l'art antérieur ne pourra s'adapter, et il n'entrera en contact avec la bande qu'en son centre.

Le document US 6,820,734 B1 décrit un dispositif de raclage selon le préambule de la revendication 1.

### Buts de l'invention

La présente invention vise à fournir un dispositif de raclage du brin de retour d'une bande transporteuse pouvant s'adapter à des bandes droites, concaves ou convexes.

La présente invention vise aussi à fournir un dispositif de raclage du brin de retour d'une bande transporteuse permettant de conserver un profil de pression constant au milieu ou sur les côtés quelle que soit la forme adoptée par la lame et/ou la bande.

### Résumé de l'invention

La présente invention concerne un dispositif de raclage du brin de retour d'une bande transporteuse comprenant:
- au moins une lame souple de raclage comprenant un élastomère et composée d'un seul tenant;
- au moins deux leviers rigides disposés de part et d'autre d'un plan de symétrie du dispositif de raclage, lesdits leviers étant capables de tourner autour de deux axes ou points de support,
caractérisé en ce que lesdits leviers sont noyés dans ladite lame souple et en ce que chaque leviers comprend un levier central disposé depuis lesdits axes ou points de support vers le centre de ladite lame souple et un levier externe disposé depuis lesdits axes ou points de support vers les bords latéraux de ladite lame souple, le rapport de la longueur du levier externe sur la longueur du levier interne étant compris entre 1 et 3, de préférence entre 1,5 et 2,5, de façon à permettre en utilisation d'équilibrer les pressions exercées par la lame souple entre les bords et le milieu de la bande transporteuse.

Selon les modes préférés de l'invention, le dispositif de raclage comprend une, ou une combinaison adaptée d'au moins deux caractéristiques suivantes:
- la lame souple est composée d'un élastomère, de préférence du caoutchouc ou d'un élastomère de polyuréthanne;
- les leviers présentent un module de flexion supérieur à 2GPa;
- le dispositif comprend une barre de support supportant les deux axes ou points de support;
- le dispositif comprend des moyens de fixation permettant de varier la position angulaire de la lame de raclage par rapport au brin de retour;
- les moyens de fixation comprennent des moyens de serrage comprenant au moins un étrier;
- les moyens de fixation comprennent un système à ouverture rapide;
- le dispositif de serrage comprend des cannelures permettant d'augmenter la pression de serrage sur la barre de support;
- la lame souple est courbe;
- le dispositif comprend un support mobile et des moyens d'amortissement permettant un mouvement de translation amorti vertical et/ou un mouvement de rotation amorti selon un axe horizontal;
- le support mobile comprend au moins une butée limitant, en utilisation, les mouvements de l'ensemble mobile;
- le support du support mobile est réglable en hauteur à l'aide d'une vis de mise en pression, ladite vis de mise en pression étant démontable après réglage de la hauteur du dispositif.

### Brève description des figures

La figure 1 représente un exemple de schéma de principe d'un dispositif de raclage selon l'invention.

La figure 2 représente la répartition des forces d'appui sur un dispositif de raclage selon l'invention, dans le cas d'une déformation convexe de celui-ci (en gris clair, le dispositif non déformé).

La figure 3 représente des exemples de positionnement des dispositifs de raclage selon l'invention par rapport à une bande transporteuse.

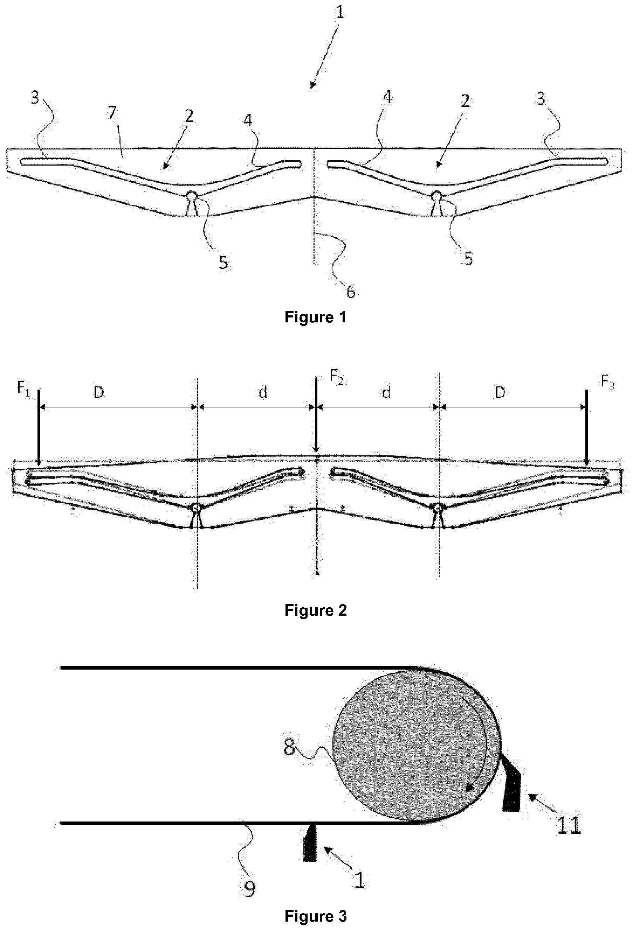

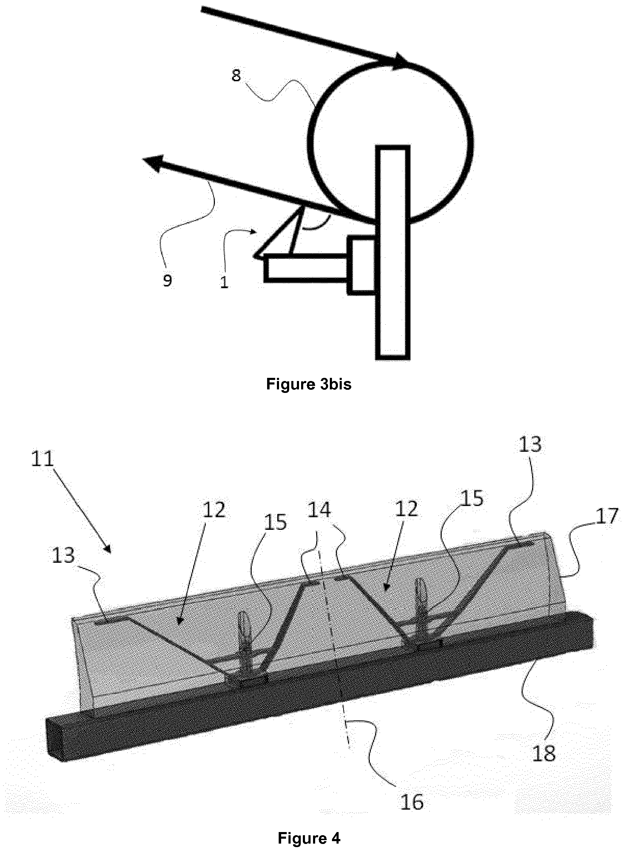

la figure 3bis représente une variante de dispositif de raclage, adaptée à une bande transporteuse inclinée par rapport à son support.

la figure 3bis représente une variante de dispositif de raclage, adaptée à une bande transporteuse inclinée par rapport à son support.

La figure 4 représente un exemple de schéma de principe d'un dispositif de raclage selon l'invention, adapté à une géométrie tangentielle.

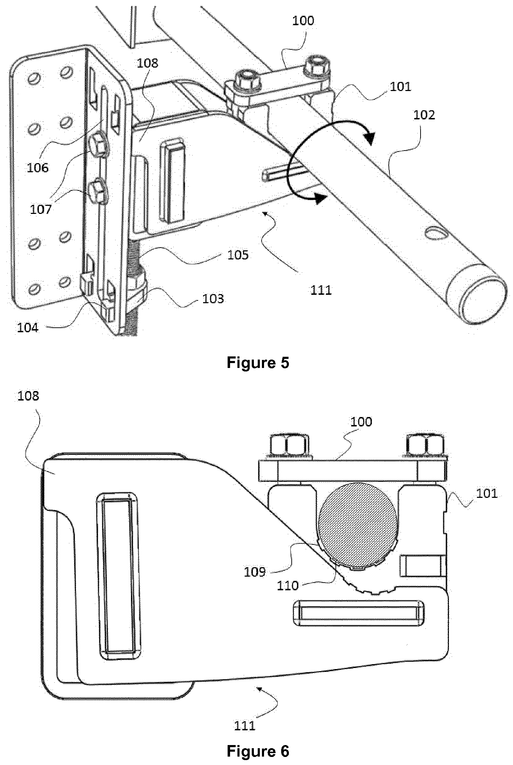

La figure 5 représente un détail d'un système de fixation du dispositif de raclage selon l'invention.

La figure 6 représente une vue latérale d'un autre exemple de système de fixation du dispositif de raclage selon l'invention.

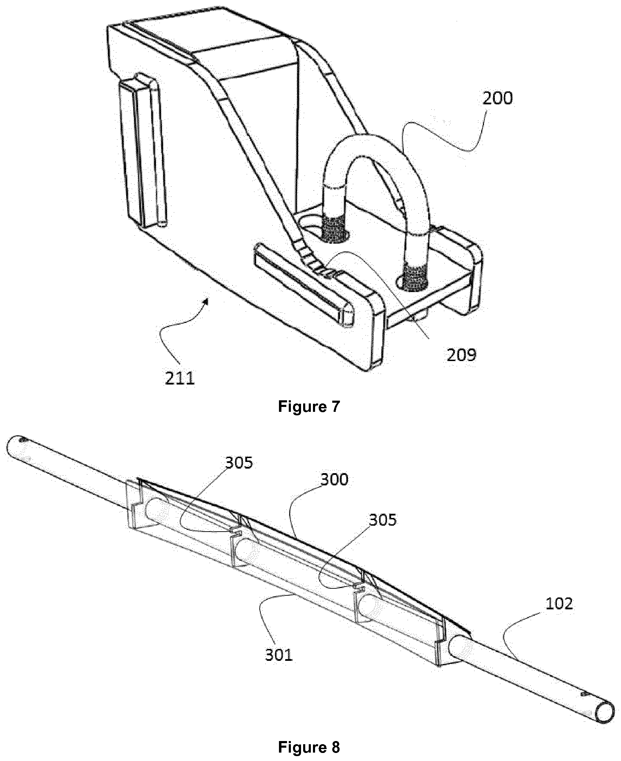

La figure 7 représente un troisième exemple de système de fixation du dispositif de raclage selon l'invention.

La figure 8 représente un exemple de système de fixation de la lame racleuse de l'invention sur une barre de support.

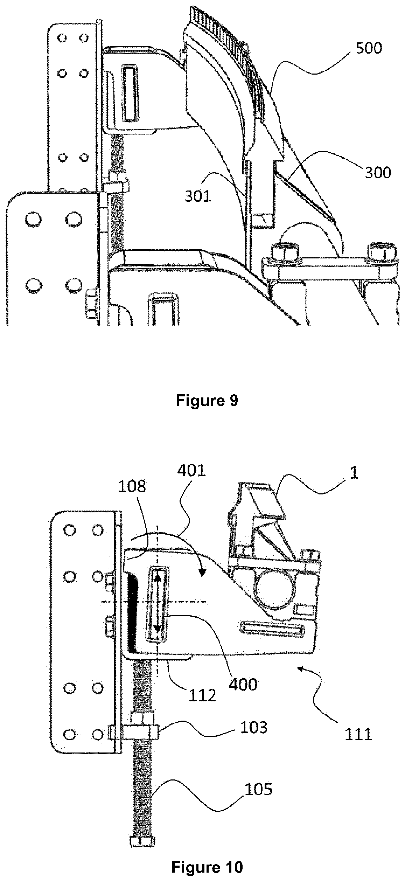

La figure 9 représente un exemple de dispositif de raclage selon l'invention comprenant une lame souple courbe.

La figure 10 représente un exemple de système d'amortissement et de mise en pression d'un système de raclage selon l'invention.

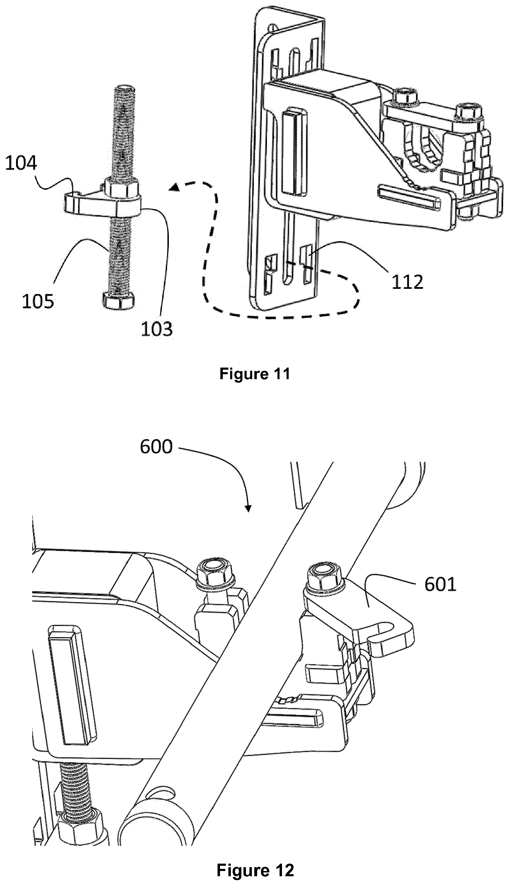

La figure 11 représente un détail d'un exemple de système de mise en pression démontable selon l'invention.

La figure 12 représente un détail d'un système de serrage à ouverture rapide utile à l'invention.

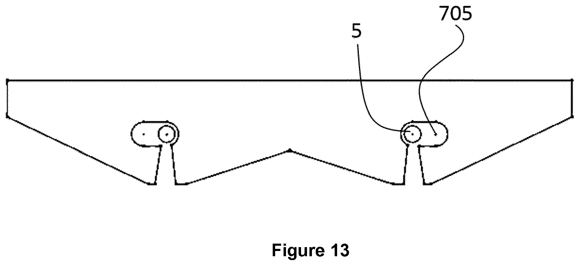

La figure 13 représente un exemple de réalisation de lame de raclage selon l'invention.

### Légende des figures

- 1:: dispositif de raclage
- 2, 12:: leviers
- 3, 13:: partie de levier comprise entre l'axe de support et le bord de la lame
- 4, 14:: partie de levier comprise entre l'axe de support et le milieu de la lame
- 5, 305 :: point d'appui
- 6, 16:: plan de symétrie du dispositif
- 7, 17:: lame souple
- 8:: tambour de tête
- 9:: brin de retour
- 11:: dispositif de raclage tangentiel
- 5, 15:: axes de support
- 18 :: barre de support supportant les axes de support
- 100 :: partie mobile du dispositif de serrage
- 101 :: étrier fixe de serrage
- 102 :: extrémité cylindrique de la barre de support
- 103 :: support de la vis de mise en pression
- 104 :: profil coulissant
- 105 :: vis de mise en pression
- 106 :: glissière verticale
- 107 :: vis de fixation
- 108 :: butée de mouvement de rotation
- 109,: 209 : crantage de l'étrier fixe de serrage
- 110 :: crantage de la barre de support
- 111, 211 :: ensemble mobile
- 112 :: lumières de fixation des profils coulissants 104
- 200 :: étrier mobile de serrage
- 300, 301 :: éléments de boitier de fixation de la lame souple
- 400 :: degré de liberté de translation verticale amortie de l'ensemble mobile
- 401 :: degré de liberté de rotation amortie de l'ensemble mobile
- 500 :: lame de raclage courbe
- 600:: système de serrage à ouverture rapide
- 601 :: pièce de serrage à ouverture rapide
- 705 :: lumière allongée de support

### Description détaillée de l'invention

Le dispositif de raclage 1,11 selon la présente invention comprend une lame souple 7,17 en élastomère sur laquelle on applique la pression depuis au moins deux points d'appui 5,305 (ou axes 5,15), cette pression étant répartie à l'aide de leviers rigides 2,12 entre le centre et les côtés.

On crée ainsi un effet de balancier qui permet:
- de s'adapter à des bandes droites, concaves et convexes;
- de conserver une pression constante au milieu ou sur les côtés quelle que soit la forme adoptée par la lame;
- en cas d'usure du centre, il suffit de remonter la totalité du racleur que de la moitié de hauteur à compenser : à mesure que les côtés descendent, le centre remonte autrement dit, la pression est renvoyée vers le centre sans augmenter déraisonnablement sur les côtés.

La figure 1 représente un schéma de principe d'un tel dispositif dans lequel une lame souple 7 repose sur deux points d'appui 5 avec deux leviers internes 2.

Les points d'appui 5 sont représentés par des trous de serrures pouvant par exemple être clipsés sur un support adéquat.

La figure 2 représente une déformation concave de la lame en fonction des pressions appliquées à la bande, permettant une adaptation à la forme de la bande et/ou une compensation de l'usure.

Le dispositif des figures 1 et 2 présente néanmoins l'inconvénient que les zones de la lame souple de raclage située au-dessus des axes ou des points d'appui doivent s'allonger pour présenter une concavité vers le bas (haut). De ce fait, la partie haute de la lame est en traction ou en compression selon l'orientation de la concavité, ce qui induit des efforts latéraux sur les points ou les axes de support. Il est possible de remédier à cet inconvénient en prévoyant des chemins de glissement 705 dans la lame souple, ce chemin de glissement permettant un mouvement latéral des axes ou points d'appui par rapport à la lame souple de raclage. Un tel dispositif est représenté à la figure 12. Ce chemin de glissement est dans ce cas sous la forme d'une lumière allongée 705 permettant un déplacement de l'axe ou du point de support 5 par rapport à la lame souple.

La cavité dans la lame souple accueillant l'axe ou le point de support peut se présenter sous la forme d'un trou traversant la lame de part en part, ou sous la forme d'un trou borgne.

Les dispositifs des figures 1, 2 et 12 sont particulièrement adaptés pour une utilisation comme racleurs sous-jacents 1 (voir figure 3). Dans ce cas, la pression est appliquée perpendiculairement au brin de retour de la bande.

Le dispositif est aussi adapté à des racleurs placés face au tambour de tête, généralement disposés comme des racleurs tangentiels 11 (voir figure 3). La figure 4 représente un dispositif de raclage selon l'invention adapté aux racleurs tangentiels. En raison de leur position, les racleurs de tambour ne travaillent pas de bas en haut comme les racleurs de brin de retour, ils travaillent plutôt en applique (racleurs tangentiels). Dans ce cas, les leviers 12 sont maintenus par des axes 15 auxquels on applique un moment de force adéquat pour maintenir la lame 17 au contact du brin de retour.

Ces axes 15 sont de préférence fixés de façon solidaire à une barre de support 18, le moment de force appliqué aux axes 15 de support pouvant avantageusement être réglé par rotation de la barre de support 18. A cette fin les extrémités 102 de la barre de support 18 seront de préférence essentiellement cylindriques, tel que représenté à la figure 5, de façon à pouvoir tourner dans un ensemble de serrage 100, 101, 200 permettant de positionner préalablement à l'utilisation la lame de raclage.

Avantageusement, l'ensemble de serrage 100, 101, 200 comprendra des cannelures 110, 210 permettant d'augmenter localement la pression de serrage de façon à augmenter les forces de frictions, et de ce fait le couple maximum pouvant être appliqué sans glissement de la barre de support.

De préférence les extrémités cylindriques de la barre de support présenteront des cannelures (ou crantage) 109 complémentaires aux cannelures 110, 210 sur la partie fixe 101 du dispositif de serrage, de façon à assurer en utilisation une fixation adéquate de la barre de support 18. De tels dispositifs de serrage crantés sont représentés aux figures 6 et 7.

Le même type de dispositif de réglage angulaire est bien entendu aussi adapté aux racleurs sous-jacents, par exemple pour l'adapter à l'inclinaison du brin de retour, tel que représenté à la figure 3bis, ou pour régler l'inclinaison d'une lame courbe 500, tel que représentée à la figure 11.

Le dispositif de serrage comprendra en outre de préférence un système d'ouverture rapide 600 tel que représenté à la figure 12. Dans un tel système une lame rigide 601 (par exemple un acier épais) est fixée au moyen d'au moins deux boulons de part et d'autre d'un étrier, au moins une des deux lumières permettant le passage d'un des deux boulons de serrage étant latéralement ouverte, de façon à laisser tourner ladite lame pour ouvrir le dispositif de serrage sans démontage complet du boulon, pour libérer la barre de support 18.

Le dispositif de raclage 1,11 de brin de retour 9 d'une bande transporteuse de l'invention comprend donc un système de levier 2,12 ou de balance permettant de transmettre les forces de pression d'un point vers un autre, en particulier, depuis les bords de la bande vers le centre de celle-ci.

Le système de levier 1,11, en transmettant les forces depuis le bord vers le centre permet d'adapter la forme d'une lame souple 7,17 venant en contact avec le brin de retour 9 de celle-ci, afin d'en racler les résidus de matériau transporté.

La lame 7 s'adaptant à la forme du brin de retour 9 permet alors de compenser une usure différente du centre de la lame 7 (lame concave ou convexe), ou un défaut de forme dudit brin 9 (bande concave ou convexe).

La pression exercée pour maintenir la lame 7 au contact du brin de retour 9 est transmise aux leviers 2, 12 au moyen de deux axes 15 ou points d'appui 5 disposés symétriquement autour d'un plan de symétrie 6,16 du dispositif de raclage 1,11.

Les leviers 2, 12 sont fixés ou posés sur ces axes (points d'appui) 5, 15 et peuvent effectuer un mouvement de rotation autour de ceux-ci de façon à transmettre les pressions exercées sur les bords de la lame 7 vers le centre de celle-ci et inversement.

Avantageusement, on définira les longueurs D des parties de leviers 3 comprises entre les axes et les bords de la lame 7 et les longueurs d des parties de leviers 4 comprises entre les axes et le milieu de la lame 7 en fonction du rapport de pression que l'on désire obtenir entre le centre et les bords du dispositif.

Selon l'invention, la tension sur le brin de retour étant plus importante au centre de la bande, et les débris à racler étant plus nombreux au centre, le rapport D/d est compris entre 1 et 3, ce qui correspond à un rapport de force F₂/(F₁+F₃) compris entre 2 et 6. Avantageusement, le rapport D/d sera proche de 2, ce qui présente un bon compromis entre l'homogénéité des pressions appliquées et l'application d'un raclage plus intense au centre.

Les leviers devront présenter une rigidité et une ductilité suffisantes pour transmettre efficacement les efforts, sans se briser ou fléchir exagérément. On pourra par exemple utiliser des métaux tels que de l'acier ou de l'aluminium, mais aussi des polymères rigides, présentant des modules de flexion supérieurs à 1000MPa, de préférence supérieurs à 2000MPa.

Dans le cas de l'utilisation de leviers polymériques, on utilisera de préférence des polymères semi-cristallins au-dessus de leurs températures de transition vitreuse, ceux-ci ayant l'avantage de présenter une ductilité importante (p.ex. HDPE).

Ces polymères comprendront de préférence une charge inorganique permettant d'augmenter leur rigidité. Ces charges pourront être de type quasi-sphérique (poudre de carbonate de Calcium, silice, oxyde de Titane,...), ou, de préférence sous forme de fibre, tel que des fibres de verre ou de Carbone.

La lame souple comprend avantageusement un élastomère, présentant un module inférieur à 200MPa, de préférence inférieur à 100MPa, de façon à pouvoir adapter sa forme sous l'effet des forces appliquées par les leviers. Ce sera par exemple du caoutchouc naturel ou synthétique réticulé, de façon à présenter une bonne résistance à l'abrasion. Les élastomères à base de polyuréthanne sont particulièrement adaptés. On utilisera de préférence en des inserts en matériaux de haute résistance à l'abrasion (ex. carbure de tungstène ou de bore) dans la lame en élastomère au niveau de la surface de frottement (cf. fig.8)

Selon l'invention, les leviers sont noyés dans la masse de la lame 7, 17, de façon à permettre une meilleure transmission des efforts, à éviter des déplacements de la lame 7, 17 par rapport aux leviers de support et de façon à protéger les leviers de la corrosion ou des attaques chimiques diverses.

Selon l'invention la lame souple 7,17 est composée d'un seul tenant.

Avantageusement, la base de la lame pourra être maintenue en place par un boitier de support comprenant deux pièces de serrages ou de support 300,301 entre lesquelles est clipsée la base de la lame souple 7, 17. Les leviers sont alors placés sous la lame (/surface de raclage), dans le cas des racleurs sous-jacents 1, ou en arrière de la surface de raclage émergeant au-dessus du boitier dans le cas de racleurs tangentiels 11.

La lame souple 7, 17 et l'éventuel boitier présenteront soit un profil droit, de préférence dans les cas où l'encombrement est limité en largeur, soit un profil courbe 500 tel que représenté à la figure 11. Le profil courbe est particulièrement avantageux lorsque la bande à nettoyer n'est pas parfaitement plane. En effet, dans ce dernier cas, l'inclinaison de la lame permettra de reprendre aussi en partie la déformation, en plus de l'effet d'équilibrage de leviers de l'invention.

Avantageusement, le dispositif de serrage sera fixé sur ensemble mobile 111 à deux degrés de libertés tel que représenté à la figure 10, permettant un mouvement de translation vertical 400 et un mouvement de bascule 401. Les mouvements de l'ensemble mobile 111 seront de préférence limités par au moins une butée 108.

Le support 112 de l'ensemble mobile 111 sera de préférence fixé à la structure du convoyeur à bande le long de glissières 106 permettant un réglage en hauteur du dispositif de l'invention au moyen d'une vis de mise en pression 105.

La vis de mise en pression 105 sera de préférence démontable de la structure du convoyeur à bande, par exemple, tel que représenté à la fig. 11, au moyen d'un système à baïonnette, comprenant au moins une lumière verticale 112 présentant un profil plus large dans sa partie haute que dans sa partie basse, dans laquelle peut coulisser au moins un profil coulissant 104 présentant une base étroite de la dimension de la partie basse de la lumière et une extrémité plus large que la partie basse de la lumière, mais plus épaisse que la partie haute de la lumière. Ledit profil coulissant 104 étant solidaire du support de la vis de mise en pression 105.

L'avantage d'un tel dispositif démontable est, qu'une fois la pression établie, le support de l'ensemble mobile peut être fixé par serrage à la structure du convoyeur à bande, et les vis de mise en pression 105 retirées, ce qui permet d'éviter la présence de ces vis en fonctionnement normal du convoyeur, ces vis pouvant potentiellement représenter des obstacles peu visibles et donc dangereux pour les personnes circulant autour du convoyeur.

## Revendications

1. Dispositif de raclage (1, 11) du brin de retour (9) d'une bande transporteuse comprenant:
- au moins une lame souple (7, 17) de raclage comprenant un élastomère et composée d'un seul tenant;
- au moins deux leviers (2, 12) rigides disposés de part et d'autre d'un plan de symétrie (6, 16) du dispositif de raclage (1, 11), lesdits leviers (2, 12) étant capables de tourner autour de deux axes (15) ou points (5, 305) de support,
**caractérisé en ce que** lesdits leviers (2,12) sont noyés dans ladite lame souple (7,17), et **en ce que** chaque levier (2,12) comprend un levier central (4) disposé depuis lesdits axes (15) ou points (5, 305) de support vers le centre de ladite lame souple (7,17) et un levier externe (3) disposé depuis lesdits axes (15) ou points (5, 305) de support vers les bords latéraux de ladite lame souple (7,17), le rapport de la longueur (D) du levier externe (3) sur la longueur (d) du levier interne étant compris entre 1 et 3, de préférence entre 1,5 et 2,5, de façon à permettre en utilisation d'équilibrer les pressions exercées par la lame souple (7, 17) entre les bords et le milieu de la bande transporteuse.

2. Dispositif de raclage (1, 11) selon la revendication 1 dans lequel la lame souple (7, 17) est composée d'un élastomère, de préférence du caoutchouc ou d'un élastomère de polyuréthanne.

3. Dispositif de raclage (1, 11) selon l'une quelconque des revendications précédentes dans lequel les leviers (2, 12) présentent un module de flexion supérieur à 2GPa.

4. Dispositif de raclage selon l'une quelconque des revendications précédentes comprenant une barre de support (18, 102) supportant les deux axes (15) ou points (5, 305) de support.

5. Dispositif de raclage (1, 11) selon la revendication 4 comprenant en outre des moyens de fixation (100, 101, 200) permettant de varier la position angulaire de la lame de raclage par rapport au brin de retour par rotation de de la barre de support (18, 102).

6. Dispositif de raclage (1, 11) selon la revendication 5 dans lequel les moyens de fixation comprennent des moyens de serrages (100, 101, 200) comprenant au moins un étrier (101, 200).

7. Dispositif de raclage (1, 11) selon la revendication 6 dans lequel les moyens de fixation comprennent un système à ouverture rapide.

8. Dispositif de raclage (1,11) selon l'une des revendications 6 ou 7, le dispositif de serrage comprenant des cannelures (109, 209) permettant d'augmenter la pression de serrage sur la barre de support (18).

9. Dispositif de raclage (1, 11) selon l'une quelconque des 5 revendications 4 à 6, dans lesquelles la lame souple (7, 17) est courbe.

10. Dispositif de raclage (1,11) selon l'une quelconque des revendications précédentes, comprenant un support mobile (111) et des moyens d'amortissement permettant un mouvement de translation amorti vertical (400) et/ou un mouvement de rotation amorti (401) selon un axe horizontal.

11. Dispositif de raclage (1, 11) selon la revendication 10, ledit support mobile (111) comprenant au moins une butée (108) limitant, en utilisation les mouvements de l'ensemble mobile (111).

12. Dispositif de raclage (1, 11) selon l'une des revendications 10 ou 11 dans lequel le support (112) du support mobile (111) est réglable en hauteur à l'aide d'une vis de mise en pression (105), ladite vis de mise en pression étant démontable après réglage de la hauteur du dispositif.

## Patentansprüche

1. Vorrichtung zum Abschälen (1, 11) des Leertrums (9) eines Förderbandes, umfassend:
- mindestens eine biegsame Klinge (7, 17) zum Abschälen, umfassend ein Elastomer und bestehend aus einem einzigen Stück;
- mindestens zwei starre Hebel (2, 12), die auf beiden Seiten einer Symmetrieebene (6, 16) der Vorrichtung zum Abschälen (1, 11) angeordnet sind, wobei die besagten Hebel (2, 12) dazu in der Lage sind, sich um zwei Stützachsen (15) oder -punkte (5, 305) zu drehen,
**dadurch gekennzeichnet, dass** die Hebel (2, 12) in die biegsame Klinge (7, 17) eingebettet sind, und dadurch, dass jeder Hebel (2, 12) einen zentralen Hebel (4) umfasst, der von den Stützachsen (15) oder -punkten (5, 305) hin zur biegsamen Klinge (7, 17) angeordnet ist, und einen äußeren Hebel (3), der von den Stützachsen (15) oder -punkten (5, 305) hin zu den seitlichen Rändern der biegsamen Klinge (7, 17) angeordnet ist,
wobei das Verhältnis zwischen der Länge (D) des äußeren Hebels (3) und der Länge (d) des inneren Hebels im Bereich zwischen 1 und 3 liegt, vorzugsweise zwischen 1,5 und 2,5, um bei der Verwendung zu ermöglichen, die Drücke auszugleichen, die von der biegsamen Klinge (7, 17) zwischen den Rändern und der Mitte des Förderbandes ausgeübt werden.

2. Vorrichtung zum Abschälen (1, 11) nach Anspruch 1, wobei die biegsame Klinge (7, 17) aus einem Elastomer besteht, vorzugsweise Kautschuk oder einem Polyurethanelastomer.

3. Vorrichtung zum Abschälen (1, 11) nach irgendeinem der vorhergehenden Ansprüche, wobei die Hebel (2, 12) ein Flexionsmodul von mehr als 2GPa aufweisen.

4. Vorrichtung zum Abschälen nach igendreinem der vorhergehenden Ansprüche, umfassend eine Stützstange (18, 102), die die zwei Stützachsen (15) oder -punkte (5, 305) stützt.

5. Vorrichtung zum Abschälen (1, 11) nach Anspruch 4, außerdem umfassend Mittel zur Fixierung (100, 101, 200), die ermöglichen, die Winkelposition der Abschälklinge mit Bezug auf das Leertrum durch Drehen der Stützstange (18, 102) zu variieren.

6. Vorrichtung zum Abschälen (1, 11) nach Anspruch 5, wobei die Fixierungsmittel Spannmittel (100, 101, 200) umfassen, umfassend mindestens eine Klammer (101, 200).

7. Vorrichtung zum Abschälen (1, 11) nach Anspruch 6, wobei die Fixierungsmittel ein System mit schneller Öffnung umfassen.

8. Vorrichtung zum Abschälen (1, 11) nach einem der Ansprüche 6 oder 7, wobei die Spannvorrichtung axiale Rillen (109, 209) umfasst, die ermöglichen, den Spanndruck auf die Stützstange (18) zu erhöhen.

9. Vorrichtung zum Abschälen (1, 11) nach einem der Ansprüche 4 bis 6, wobei die biegsame Klinge (7, 17) gekrümmt ist.

10. Vorrichtung zum Abschälen (1, 11) nach irgendeinem der vorhergehenden Ansprüche, umfassend eine bewegliche Stütze (111) und Dämpfungsmittel, die eine vertikale gedämpfte Translationsbewegung (400) und/oder eine gedämpfte Drehbewegung (401) gemäß einer horizontalen Achse ermöglichen.

11. Vorrichtung zum Abschälen (1, 11) nach Anspruch 10, wobei die bewegliche Stütze (111) mindestens einen Anschlag (108) umfasst, der bei Verwendung die Bewegungen der beweglichen Einheit (111) begrenzt.

12. Vorrichtung zum Abschälen (1, 11) nach einem der Ansprüche 10 oder 11, wobei die Stütze (112) der beweglichen Stütze (111) in der Höhe mit Hilfe einer Schraube zur Unterdrucksetzung (105) eingestellt werden kann, wobei die Schraube zur Unterdrucksetzung nach der Einstellung der Höhe der Vorrichtung abmontiert werden kann.

## Claims

1. Scraping device (1, 11) for the return strand (9) of a conveyor belt comprising:
- at least one flexible scraping blade (7, 17) comprising an elastomer and made in one piece;
- at least two rigid levers (2, 12) positioned on either side of a plane of symmetry (6, 16) of the scraping device (1, 11), said levers (2, 12) being capable of rotating about two axes (15) or points (5, 305) of support,
**characterized in that** said levers (2, 12) are embedded in said flexible blade (7, 17), and **in that** each lever (2, 12) comprises a central lever (4) positioned from said axes (15) or points (5, 305) of support toward the center of said flexible blade (7, 17) and an outer lever (3) positioned from said axes (15) or points (5, 305) of support toward the side edges of said flexible blade (7, 17), the ratio of the length (D) of the outer lever (3) to the length (d) of the inner lever being between 1 and 3, preferably between 1.5 and 2.5, so as to make it possible, during use, to balance the pressures exerted by the flexible blade (7, 17) between the edges and the middle of the conveyor belt.

2. Scraping device (1, 11) according to claim 1, wherein the flexible blade (7, 17) is made from an elastomer, preferably rubber or a polyurethane elastomer.

3. Scraping device (1, 11) according to any one of the preceding claims, wherein the levers (2, 12) have a bending modulus greater than 2 GPa.

4. Scraping device according to any one of the preceding claims, comprising a support bar (18, 102) supporting the two axes (15) or points (5, 305) of support.

5. Scraping device (1, 11) according to claim 4, further comprising fastening means (100, 101, 200) making it possible to vary the angular position of the scraping blade relative to the return strand by rotation of the support bar (18, 102).

6. Scraping device (1, 11) according to claim 5, wherein the fastening means comprise clamping means (100, 101, 200) comprising at least one stirrup (101, 200).

7. Scraping device (1, 11) according to claim 6, wherein the fastening means comprise a quick opening system.

8. Scraping device (1, 11) according to one of claims 6 or 7, the clamping device comprising splines (109, 209) making it possible to increase the clamping pressure on the support bar (18).

9. Scraping device (1, 11) according to any one of claims 4 to 6, wherein the flexible blade (7, 17) is curved.

10. Scraping device (1, 11) according to any one of the preceding claims, comprising a movable support (111) and damping means allowing a vertical damped translational movement (400) and/or a damped rotational movement (401) along a horizontal axis.

11. Scraping device (1, 11) according to claim 10, said movable support (111) comprising at least one stop (108) limiting, during use, the movements of the movable assembly (111).

12. Scraping device (1, 11) according to one of claims 10 or 11, wherein the height of the support (112) of the movable support (111) is adjustable by means of a pressurizing screw (105), said pressurizing screw being removable after adjusting the height of the device.
